(19) Europäisches Patentamt
European Patent Office
Office européen des brevets

(11) Veröffentlichungsnummer: **0 193 824 A2**

(12) **EUROPÄISCHE PATENTANMELDUNG**

(21) Anmeldenummer: **86102351.3**

(22) Anmeldetag: **24.02.86**

(51) Int. Cl.⁴: **A 01 K 5/02**, A 01 K 1/035

(30) Priorität: **06.03.85 HU 83985**

(43) Veröffentlichungstag der Anmeldung: **10.09.86 Patentblatt 86/37**

(84) Benannte Vertragsstaaten: **AT BE CH DE FR GB IT LI LU NL SE**

(71) Anmelder: **RICHTER GEDEON VEGYESZETI GYAR R.T., Gyömröi ut 19-21, H-1103 Budapest X (HU)**

(72) Erfinder: **Sipka, Gáspár, Móricz Zs. u. 46, H-2141 Csömör (HU)**
Erfinder: **Kovács, István, Mádi u. 85, H-1104 Budapest (HU)**

(74) Vertreter: **Patentanwälte Viering & Jentschura, Steinsdorfstrasse 6, D-8000 München 22 (DE)**

(54) **Selbstfütteranlage zum Verfüttern von pulverartigem Futter bei der Kleintierhaltung.**

(57) Gegenstand der Erfindung ist eine Selbstfütteranlage zum Verfüttern von pulverartigem Futter bei der Kleintierhaltung in Käfigen, insbesondere von Nagetieren in Laboratorien, die einen an die Seitenwand (17) des Käfigs anschließbaren und oben offenen Futtervorratsraum (1) aufweist. Der Futtervorratsraum (1) ist von einem sich nach unten erweiternden Mantel (2) umgrenzt und unten mit einer Bodenplatte (4) abgeschlossen. In den Futtervorratsraum (1) ragt eine Leitplatte (7), die als sich nach unten erweiternder Kegelmantelabschnitt ausgebildet ist, dessen Kegelwinkel (α) kleiner als der Kegelwinkel (β) des Mantels (2) ist. Diese Leitplatte (7) begrenzt einen für ein Tier bestimmten Fütterungsraum (6), der mit einer Schwelle (9) mit nach innen abgewinkelter Oberkante versehen ist. Form und Abmessungen des Fütterungsraumes richten sich nach den Kopfmaßen des jeweiligen Tieres. Außerdem können vor dem Fütterungsraum (16) ein mit Fußgitter (13) und Schutzgitter (16) versehener Futtersammelraum (11) und in dem Fütterungsraum (6) das Tretelement (19) eines die Gewölbe- bzw. Hohlraumbildung im Futter verhindernden Elementes (10) innerhalb des Futtervorratsraumes (1) vorhanden sein.

β
3
α
1
7
2
6
17
16
5
12
15
13
4
8
10
11
14
9
18

EP 0 193 824 A2

PATENTANWÄLTE

VIERING & JENTSCHURA

zugelassen beim Europäischen Patentamt
European Patent Attorneys — Mandataires en Brevets Européens

Dipl.-Ing. Hans-Martin Viering · Dipl.-Ing. Rolf Jentschura · Steinsdorfstraße 6 · D-8000 München 22

0193824

*Selbstfütteranlage zum Verfüttern von pulverartigem Futter bei der Kleintierhaltung*

*Gegenstand der Erfindung ist eine Selbstfütteranlage zum Verfüttern von pulverartigem Futter bei der Kleintierhaltung, insbesondere bei Labornagetierhaltung im Käfig, wobei die Anlage an die Käfigseitenwand angeschlossen werden kann und einen oben offenen Futtervorratsraum aufweist.*

*Für Tierversuche in Laboratorien werden in großer Menge Nagetiere, z.B. Mäuse, Ratten, Meerschweinchen und Kaninchen verwendet. Diese Tiere werden einzeln oder in Gruppen von einigen Tieren in Käfigen unter kontrollierten Verhältnissen gehalten. Im Verlaufe der Versuche werden die Tiere mit Futtergemischen gefüttert, die einen Wirkstoff (ein Medikament) in einer genau festgelegten Menge enthalten. Im Interesse der adäquaten Vermischung des Wirkstoffes gelangen pulverartige Futterarten zur Anwendung. Da aber die Verfütterung von pulverartigen Futterarten mit zahlreichen bisher ungelösten Problemen verbunden ist, werden aus dem Futter Tabletten bzw. Stäbchen gepreßt und so mit Hilfe irgendeines Behälters, z.B. eines Drahtkorbes oder eines ähnlichen Elementes in den Käfig gesetzt. Bei dem Verpressen der Tabletten bzw. Stäbchen kommt es aber vor, daß einzelne Stücke davon oder einzelne Teile der jeweiligen Stücke den Wirkstoff nicht in der gleichen Menge enthalten, was den Geschmack beeinflußt, demzufolge die Tiere die den geringeren Anteil an Wirkstoffen enthaltenden Tabletten bzw. Tablettenteile verzehren, da diese z.B. weniger bitter sind. Eben aus diesem Grunde wäre es wünschenswert, die Tiere mit einem pulverartigen Futter füttern zu können, aus dem sie die schmackhafteren, weniger bitteren, d.h. weniger Wirkstoff enthaltenen Teile nicht heraussuchen können.*

*II/ba*

Telefon (0 89) 29 34 13 und 29 34 14 · Telefax (0 89) 22 839 20 · Telex 17 898 454+ · Telegramm Steinpat München

Pulverartige Futtergemische neigen aber zum Zusammenkleben und zur Hohlraum- bzw. Gewölbebildung, demzufolge das Futter in dem Speicher bzw. Vorratsraum der zur Zeit bekannten Selbstfütteranlagen steckenbleibt und nicht dorthin gelangt, wo es die Tiere erreichen können. Es kann vorkommen, daß die Tiere verhungern, obwohl in der Selbstfütteranlage genügend Futter vorhanden ist. Eine weitere Schwierigkeit bei der Fütterung mit pulverartigen Futtermitteln bedeutet der Umstand, daß diese an dem Haarkleid, insbesondere den Vorderfüßen der Tiere haften bleiben. Das an dem Fell der Tiere haftende Futter wird durch diese aus der Fütteranlage in den Lebensraum mitgenommen, wodurch einerseits diese Futtermenge in Verlust gelangt, andererseits den Lebensraum der Tiere verunreinigt. Dies bringt insbesondere in dem Falle Nachteile, wenn die Versuchstiere - z. B. Mäuse, Ratten, Meerschweinchen, Kaninchen - in den Laboratorien zur Vornahme von authentischen Messungen unter kontrollierten Umständen bzw. wertvolle Tiere unter maximalen Hygieneverhältnissen gehalten werden müssen. In diesen Fällen ist es besonders wichtig, daß die Fütterung der Tiere rationell mit einem Mindestmaß an menschlichem Eingreifen bei höchstmöglicher Hygiene erfolgt. Im Futtervorratsraum der Selbstfütteranlage soll für eine lange Zeitspanne ausreichendes Futter Platz finden, ein Futterverlust soll nicht stattfinden, das Futter soll nicht in den Lebensraum der Tiere gelangen können und im Futtervorratsraum soll keine Hohlraumbildung bzw. Gewölbebildung im Futter auftreten können. Im Falle von Laborversuchen muß die Menge des verzehrten Futters genau meßbar sein, d.h. kein Futter darf aus dem System austreten: wird also von dem Gewicht der aufgefüllten Selbstfütteranlage das Gewicht nach dem Versuch zurückgewogen, muß der Gewichtswert erhalten werden, der während der Zeitdauer des Versuches durch das Tier von dem Futtermittel verzehrt wurde.

Zur Käfighaltung von Tieren ist aus der HU-A-178 979 eine Selbstfütteranlage bekannt, die innen an die Seitenwand des Käfigs gehängt werden kann und aus Rückwand-, Futtertrog, Seitenwand und Vorderwand sowie einer schwingenden Zulaufleitplatte besteht. Die schwingende Zulaufleitplatte hat die Aufgabe zu verhindern, daß zwischen der zueinander parallelen Rückwand und Vorderwand im Futtermittel eine Gewölbe- und demzufolge Hohlraumbildung eintritt. Die Zulaufleitplatte ist mit nach innen stehenden Zulaufleitplattenrippen versehen, die Fütterungsstände

festlegen. Der oben offene Futtervorratsraum ist zwischen der senkrechten Rückwand und der schwingenden Zulaufleitplatte vorgesehen und wird durch letztere unten eingeengt, so daß pulverartige oder dem naheliegende Korngrößen aufweisende Futtermittel hier zu einem Zusammenkleben und demzufolge einer Gewöbebildung und dadurch bedingt, einer Holhraumbildung neigen. Diese Selbstfütteranlage gewährleistet keineswegs, daß in den Lebensraum der Tiere kein Futter gelangt, vielmehr fällt das Futter leicht aus dem Trog bzw. wird während der Fütterung durch die Tiere von dort herausgestreut und geht so einerseits in Verlust. Andererseits besteht die Gefahr, daß das Futtermittel durch Exkremente verunreinigt wird, das daher bei einem Verzehr durch die Tiere Krankheiten verursachen kann.

Bekannt ist weiterhin aus der HU-A-T/22283 eine mit Zuführraum versehene Kaninchen-Selbstfütteranlage, insbesondere zur Fütterung von granuliertem Futtermittel, bei der die Gefahr der Verunreinigung und des Herausstreuens des Futtermittels dadurch beseitigt wird, daß die Trennwand zwischen dem die Selbstfütteranlage bildenden Futtertrog und dem Zuführraum als ein das Futtermittel zuteilendes Wehr ausgebildet ist, wobei die vordere Platte des Futtertroges zurückgebogen zur Verhinderung des Zerstreuens bzw. Herauskratzens des Futtermittels dient. Das bei der Kaninchenhaltung ein Problem bedeutende zu Staub werdende Futtermittel fällt durch die siebartig ausgebildete Bodenplatte des Zuführraumes und des Futtertroges hindurch. Bei dieser Ausführungsform ist der oben offene Zuführraum nach unten zu sich verengend ausgeführt, d.h. wenn zu einem Zusammenkleben neigende oder pulverartige Futtermittel eingefüllt werden, besteht die Gefahr einer Gewölbe- und demzufolge Hohlraumbildung. Weiterhin ist das Sammeln der durch die siebartige Bodenplatte hindurchfallenden Futtermittel keineswegs gelöst, die so in Verlust gelangen.

Aus den vorstehenden Ausführungen ist klar ersichtlich, daß keine der bisher beschriebenen Ausführungsformen den eingangs genannten Forderungen voll und ganz entspricht.

Zweck der Erfindung ist deshalb eine bei der Käfighaltung von Kleintieren, insbesondere Nagetieren in Laboratorien, zur Fütterung von pulverartigen

*Futtermitteln verwendbare Selbstfütteranlage zu schaffen, die sich zur verlustfreien, hygienischen und kontinuierlichen Fütterung von in Käfigen einzeln oder in Gruppen mit einigen Exemplaren gehaltenen Tiere eignet. Dazu müssen zwei Bedingungen erfüllt werden: einerseits muß dafür gesorgt werden, daß das Futtermittel ungehindert in den Fütterungsraum gelangt, keine Gewölbebildung, d.h. keine Hohlraumbildung im Futtervorratsraum eintritt, andererseits, daß die Tiere das Futtermittel aus der Fütteranlage nicht herausstreuen können.*

*Im Sinne der Erfindung wird die gestellte Aufgabe durch eine bei der Käfighaltung von Kleintieren, insbesondere Nagetieren in Laboratorien, zur Fütterung von pulverartigen Futtermitteln verwendbaren Selbstfütteranlage erreicht, die einen an die Seitenwand des Käfigs anschließbaren oben offenen Futtervorratsraum aufweist, der gemäß der Erfindung von einem sich nach unten erweiternden Mantel begrenzt ist, wobei eine in den Futtervorratsraum hineinreichende, den Fütterungsraum für ein Tier festlegende Leitplatte vorgesehen ist, der Fütterungsraum mit einer Schwelle mit nach innen gekrümmter Umrandung versehen ist und der Futtervorratsraum unten mit einer Bodenplatte abgeschlossen ist. Vorteilhaft ist es, wenn die Leitplatte ein derartiger sich nach unten hin erweiternder Kegel bzw. abgestummpfter Kegelschnitt ist, dessen Kegelwinkel kleiner als der Kegelwinkel des Mantels ist und dessen Grundfläche eine durch eine Parabel begrenzte Gestalt hat, die sich an die Umrißlinie des Kopfes des gefütterten Nagetieres anpaßt. Damit das Tier nur in dem zum Fressen erforderlichen Ausmaß in den Fütterungsraum eindringen kann, ist es zweckmäßig, wenn der größte Abstand zwischen dem Außenrand des Fütterungsraumes und der Leitplatte im wesentlichen mit dem Abstand vom Nacken bis zur Nasenspitze des gefütterten Tieres übereinstimmt. Der Abstand zwischen der Leitplatten-Unterkante und der Bodenplatte ist vorzugsweise kleiner als das größte Kopfprofil des gefütterten Tieres. Bei einer vorteilhaften Ausführunsform besitzt die Anlage ein quer durch den Fütterungsraum geführtes, in der Leitplatte eine Pendelbewegung erlaubend befestigtes, in den Futtervorratsraum hineinreichendes, die Gewölbebildung und dadurch die Hohlraumbildung verhinderndes Element. Schließlich ist es zweckdienlich, wenn die er*

findungsgemäße Selbstfütteranlage einen vor dem Fütterungsraum angeordneten, mit Fußgitter und Schutzgitter versehenen Futtersammelraum besitzt.

Die Erfindung wird im weiteren anhand von Ausführungsbeispielen aufgrund der beigefügten Zeichnungen ausführlich beschrieben. In den Zeichnungen zeigen

Fig. 1 die erfindungsgemäße Selbstfütteranlage im skizzierten Längsschnitt,

Fig. 2 den Schnitt A-A in Fig. 1,

Fig. 3 eine abweichende Ausführungsform der erfindungsgemäßen Selbstfütteranlage, die auch mit einem Futtermittelsammelraum versehen ist,

Fig. 4 eine der Fig. 3 ähnliche Ausführungsform in perspektivischer Ansicht,

Fig. 5 a-c eine mögliche Ausführungsform des erfindungsgemäßen die Gewölbe- bzw. Hohlraumbildung verhindernden Elementes in Vorderansicht, Seitenansicht bzw. Draufsicht.

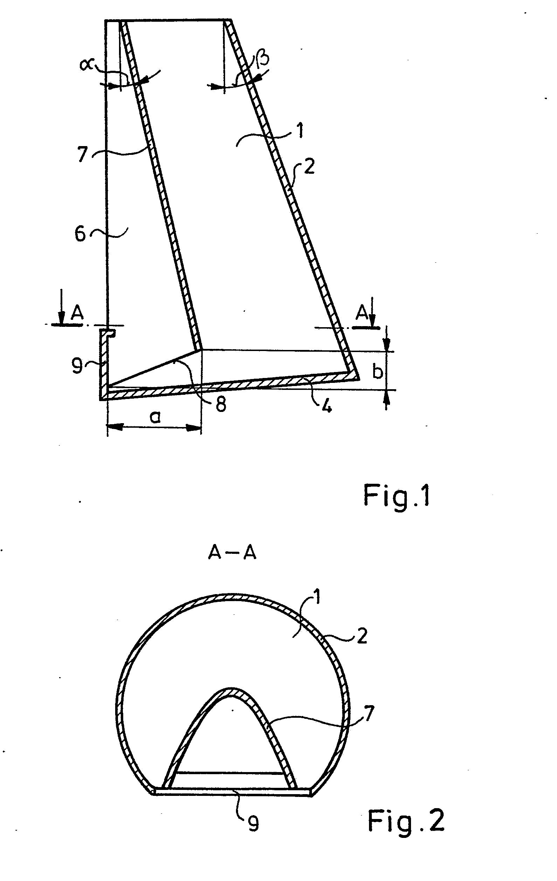

Die einfachste Ausführungsform der erfindungsgemäßen Selbstfütteranlage ist in den Fig. 1 und 2 zu sehen. Die erfindungsgemäße Selbstfütteranlage besitzt einen oben offenen Futtervorratsraum 1, der von einem sich nach unten erweiternden Mantel 2 umgeben ist. Der Mantel 2 ist in den in Fig. 1 und Fig. 2 dargestellten Fällen ein auf der einen Seite eingestülpter Kegelstumpf, wobei der eingestülpte Teil eine Leitplatte 7 bildet und einen sich unten erweiternden Fütterungsraum 6 bestimmt, da die Leitplatte 7 im wesentlichen eine Kegelschnittform aufweist. Der Kegelwinkel $\beta$ des den Mantel 2 bildenden Kegelstumpfes ist größer als der Kegelwinkel $\alpha$ des die Leitplatte 7 bildenden Kegelschnittes und das horizontale Profil der Leitplatte 7 ist im wesentlichen parabelförmig, da dies der Kopfform der Nagetiere am besten entspricht. Der Fütterungsraum 6 wird vorn durch eine nach oben ragende Schwelle 9 mit einer nach innen abgewinkelten oberen Umrandung begrenzt. Die Unterkante 8 der Leitplatte 7 steigt aus der Einstülpung resultierend nach hinten zu schräg an, ist aber so ausgebildet, daß auch ihr höchstliegender Punkt tiefer als die Oberkante der Schwelle 9 liegt. Der größte Abstand a zwischen dem von der Schwelle 9 festgelegten äußeren Rand des Fütterungsraumes 6 und der Leitplatte 7 ist so eingestellt, daß das Tier nur in dem zur Nahrungsaufnahme erforderlichen Maße in den Fütterungsraum eindringen kann. Dieser Bedingung entspricht der Abstand a, der im wesentlichen mit der vom Nacken bis zur Nasenspitze des gefütterten Tieres reichenden Entfernung übereinstimmt. Der Futtervorratsraum 1 wird unten von der Bodenplatte 4 abgeschlossen, die waagrecht oder mit einer geringen Neigung in Richtung des Fütterungsraumes verlaufen kann. Der größte Abstand b zwischen der Unterkante 8 der Leitplatte 7 und der Bodenplatte 4 ist so auszuwählen, daß die Tiere nicht durch die Öffnung hindurchschlüpfen können. Dieser Bedingung entspricht ein Abstand b, der kleiner als das größte Kopfprofil des gefütterten Tieres ist. (Hier ist nämlich zu berücksichtigen, daß die erfindungsgemäße Selbstfütteranlage in erster Linie zur Fütterung von in Laboratorien gehaltenen Nagetieren, unter anderem Ratten, eingesetzt wird, und daß diese Tiere die Eigenheit haben zu scharren und sogar zu versuchen, sich durch das Futter aus dem geschlossenen Raum herauszunagen.)

Hier ist zu bemerken, daß die Abmessungen der Selbstfütteranlage jeweils den Körpermaßen des Tieres angepaßt werden müssen, das gefüttert werden soll; offensichtlich müssen zu den sich an die Körpermaße der Tiere anpassenden Abständen a und b proportional auch alle anderen Abmessungen der Selbstfütteranlage z.B. zur Haltung von Mäusen kleiner und zur Haltung von Ratten z.B. größer gewählt werden. Zweckdienlicherweise ist der Durchmesser der Selbstfütteranlage so auszuwählen, daß die Tiere mit ihren Vorderfüßen jeden Punkt des Bodens des Futtervorratsraumes erreichen und das Futter so vollständig herausscharren können, d.h. daß keine toten Räume übrigbleiben. Hinsichtlich der Höhe der Selbstfütteranlage liegen keine Festlegungen vor bzw. hängt die Höhe davon ab, welche Futtermenge auf einmal eingefüllt werden soll. Unter Laboratoriumsverhältnissen ist diese von der Länge der Versuchsdauer abhängig, die nur einige Stunden aber auch mehrere Tage betragen kann. Da es zweckmäßig ist, wenn das für die gesamte Versuchsdauer erforderliche Futter auf einmal eingefüllt werden kann, ist für eine mehrere Tage umfassende Versuchsdauer natürlich ein größerer Futtervorratsraum erforderlich, was im Rahmen der Vernünftigkeit durch Erhöhung der Bauhöhe erreicht werden kann.

Der Anschluß der Selbstfütteranlage gemäß Fig. 1 und Fig. 2 an den Käfig kann auf jede dazu geeignete Weise vorgenommen werden und dazu ist es lediglich erforderlich, an der Seitenwand des Käfigs eine entsprechende Öffnung vorzusehen, durch die das Tier zum Fütterungsraum gelangen kann.

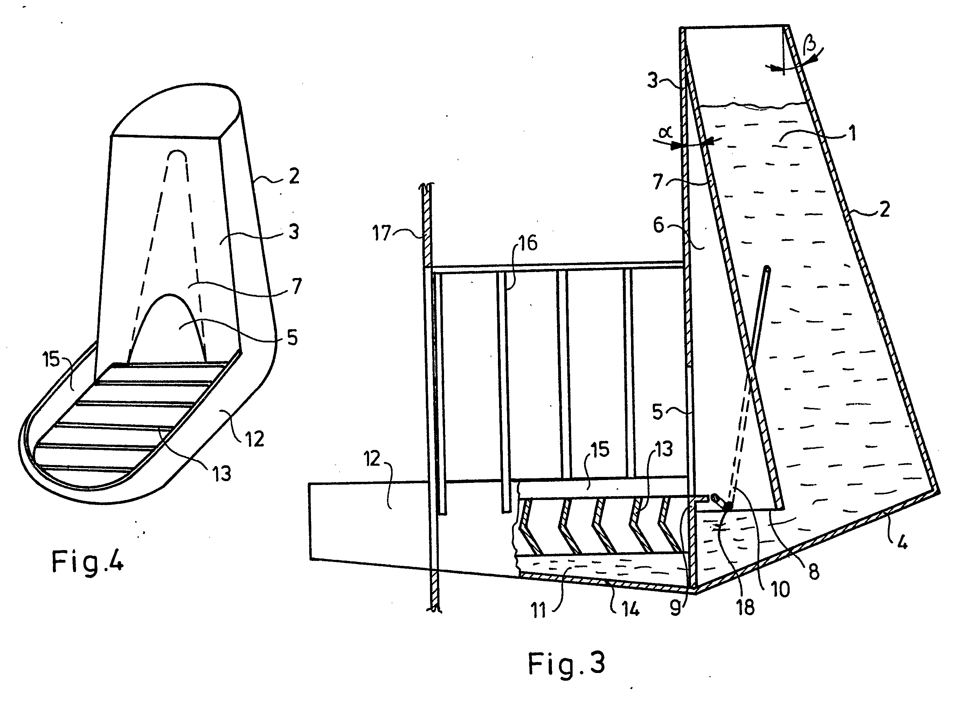

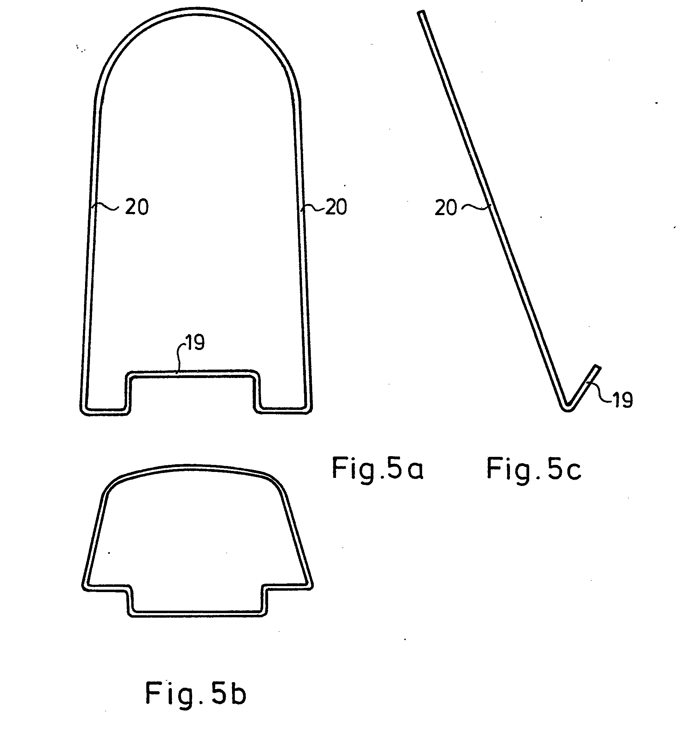

Fig. 3 zeigt eine Selbstfütteranlage, deren Mantel halbkegelstumpfförmig ausgeführt und vorn durch eine senkrechte ebene Stirnplatte 3 abgeschlossen ist. In der Stirnplatte 3 ist die Fütterungsöffnung 5 vorgesehen, deren unteren Rand die nach innen abgewinkelte Umrandung der Schwelle 9 bildet. Die Leitplatte 7 ist hier ein separater Kegelschnitt, dessen Unterkante 8 waagerecht verläuft und der in einer den Fütterungsraum 6 umgebenden Weise an der Stirnplatte 3 befestigt ist. Durch den Fütterungsraum 6 ist quer ein die sog. Gewölbebildung bzw. Hohlraumbildung hinderndes Element 10 (Fig. 5a-c) hindurchgeführt, das durch je eine in der Leitplatte 7 an beiden Seiten vorgesehene Bohrung 18 hindurchgehend in den Futtervorratsraum 1 hineinreicht. Dieses Verhinderungselement 10 ist in den Bohrungen 18 mit einem Spielsitz angeordnet, so daß das Tier bei einem Niedertreten des quer durch den Fütterungsraum 6 hindurchgeführten Treteelements 19 das Element 10 innerhalb des Futtervorratsraumes verschwenkt. Die Gestalt des die Gewölbe- bzw. Hohlraumbildung verhindernden Elementes 10 hat zur Ausbildung des Tretelementes entweder eine mehrfach gekrümmte Linienführung (Fig. 5a-c) oder ein eigens daran befestigtes Element, mit dessen Hilfe es von dem Tier während des Tretens in eine schaukelartige Pendelbewegung versetzt werden kann. Die in den Futtervorratsraum 1 hineinreichenden Schenkel des die Gewölbe- bzw. Hohlraubildung verhindernden Elementes 10 sind außerhalb der Bohrungen 18 nach oben gebogen und entweder beidseitig spiralartig verdreht oder an den beiden Schenkelenden eine Schleife bildend verbunden (Fig. 5a), um im Verlaufe der Pendelbewegung das pulverartige Futtermittel in jeder Richtung wirksam aufzulockern und dadurch eine Gewölbe- bzw. Hohlraumbildung zu verhindern.

Die in Fig. 3 dargestellte Selbstfütteranlage ist nicht unmittelbar an die mit 17 bezeichnete Seitenwand des Käfigs angeschlossen, da hier vor dem Fütterungsraum 6 ein mit einem Fußgitter 13 versehener Futtersammelraum 11 eingefügt ist. Der Futtersammelraum 11 ist mit einer Seitenwand 12 versehen, deren Umrandung 15 über das Fußgitter 13 gezogen ist und unten von der Bodenplatte 14 abgeschlossen wird. Zweckdienlicherweise ist das Fußgitter 13 und/oder die Bodenplatte 14 mit einem Gefälle in Richtung zu der Selbstfütteranlage hin ausgeführt. Das Fußgitter 13 kann aus einfach quergelegten Stäben oder Drähten bestehen (siehe Fig. 4), zweckdienlicher ist es jedoch, wenn es aus in der in Fig. 3 dargestellten Weise abgewinkelten vertikalen Platten mit Kanälen dazwischen ausgebildet wird, was dazu dient, daß die Tiere, die sich im Futtersammelraum ansammelnden Futterabfälle durch das Gitter greifend nicht mehr erreichen können. Schließlich kann ein von der Fütterungsöffnung 5 der Selbstfütteranlage bis zur Seitenwand 17 des Käfigs reichendes Schutzgitter 16 vorgesehen sein, das den Bewegungsraum der Tiere auf dem vom Käfig zur Selbstfütteranlage führenden Weg beschränkt und gewährleistet, daß das Tier die Selbstfütteranlage stets nur zurückweichend verläßt.

Fig. 4 zeigt eine zu der in Fig. 3 dargestellten ähnliche Selbstfütteranlage, wobei jedoch hier die Selbstfütteranlage mit dem Futtersammelraum eine Einheit bildet und das Gitter 13 aus einfachen Stäben besteht.

Bei der Anordnung der Selbstfütteranlage gemäß Fig. 3 und Fig. 4 an der Käfigseitenwand ist für eine genaue Anpassung zu sorgen, damit die Tiere durch freibleibende Spalte nicht hindurchgelangen können.

Die erfindungsgemäße Selbstfütteranlage wird vor ihrer Verwendung mit einer entsprechenden Menge an Futtermittel aufgefüllt und dann auf irgendeine dazu geeignete Art und Weise und mit beliebigen Mitteln an der Seitenwand des zur Tierhaltung dienenden Käfigs befestigt. Das Tier kann nach Belieben zu je

der Zeit Nahrungsmittel verzehren, indem es das aus dem Futtervorratsraum 1 ungehindert in den Fütterungsraum 6 gelangende Futter über die nach innen abgewinkelte Oberkante der Schwelle 9 hinweg mit seinem Kopf erreicht. Der Pegel des Futtermittels bleibt stets unter der Höhe der Schwelle 9, da die Leitplatte 7 tiefer als die Schwelle 8 herunterreicht. Das Tier dringt während der Nahrungsaufnahme auch mit seinen Vorderfüßen (Pfoten) in den Fütterungsraum hinein, kann aber das Futter von dort wegen der nach innen abgewinkelten Oberkante der Schwelle 9 nicht herausscharren. Die Selbstfütteranlage eignet sich auch dazu, mehrere in einem Käfig gehaltene Tiere zu versorgen, da sie die Tiere nacheinander aufsuchen können.

Obwohl die ungehinderte Abwärtsbewegung des im Futtervorratsraum 1 befindlichen pulverartigen Futters bereits durch den Umstand sichergestellt wird, daß der sich nach unten hin erweiternde Mantel 2 und die eine geringere Neigung als der Mantel 2 aufweisende Leitplatte 7 einen sich nach unten hin eindeutig erweiternden Raum festlegen, gibt es trotzdem besonders zum Zusammenkleben neigende Futtermittelarten, bei denen es zweckdienlich ist, auch die in den Fig. 3 und 5 dargestellten, zur Verhinderung der Gewölbe- bzw. Hohlraumbildung dienenden Elemente 10 zu verwenden. Die Tiere treten während der Futteraufnahme mit ihren Vorderfüßen auf den quer durch den Fütterungsraum geführten Teil dieser zur Verhinderung der Gewölbe- bzw. Hohlraumbildung dienenden Elemente 10 und versetzen diese in eine schaukelartige Pendelbewegung, wodurch der in den Futtervorratsraum 1 hineinreichende Teil des Elementes das Futter in jeder Richtung in Bewegung bringt. Dieses Verhalten der Tiere wird auch dadurch gefördert, wenn das Fußgitter 13 in Richtung zu dem Fütterungsraum 6 hin ein Gefälle aufweist und dadurch das Körpergewicht des Tieres auf die Vorderfüße verlagert wird. Der in Fig. 3 dargestellte mit Fußgitter 13 und Schutzgitter 16 versehene Futtersammelraum 11 dient dazu, daß das Tier sobald es die Nahrungsaufnahme abschließend den Fütterungsraum verläßt und innerhalb der Umrandung 15 vom Fütterungsraum 6 rückwärts zurückzuweichen gezwungen ist, das noch an seinen Vorderfüßen haftende Futter am Gitter abstreift und letzteres in den Sammelraum unter das Gitter herunterfällt. So kann erreicht werden, daß Futter nicht oder zumindest nur in einer zu vernachlässigenden Menge in den Lebensraum der Tiere gelangt.

Die erfindungsgemäße Selbstfütteranlage kann z.B. an einen Stoffwechsel-Käfig angeschlossen für Versuche mit Nagetieren in Laboratorien verwendet werden. Der sogenannte Stoffwechsel-Käfig ist ein derart ausgebildeter Käfig, daß er das Sammeln der von den Tieren abgesonderten Harne und Fäkalien ermöglicht. Die Fütterung kann z.B. mit der erfindungsgemäßen Selbstfütteranlage, das Tränken hingegen mit Hilfe der Selbsttränkeanlage gemäß der HU-A- 305/82 automatisch erfolgen. In diesem Falle wird der Futtervorratsraum 1 der Selbstfütteranlage mit der erforderlichen Futtermenge aufgefüllt und dann wird die vollgefüllte Selbstfütteranlage genau abgewogen. Nach Abschluß des Versuches wird die Selbstfütteranlage mit dem darin zurückgebliebenen restlichen Futtermittel zusammen erneut abgewogen, wodurch man die im Verlaufe des Versuches von den Tieren tatsächlich verzehrte Futtermenge erhält, da nämlich außer der im Futtersammelraum befindlichen Abfälle praktisch keine Futterverluste auftreten.

Die erfindungsgemäße Selbstfütteranlage kann natürlich nicht nur in Laborversuchen, sondern auch für normale Tierhaltungszwecke in all denen Fällen verwendet werden, wenn die Haltung mit der Verfütterung von pulverförmigen Futtermitteln erfolgt.

Der Vorteil der erfindungsgemäßen Selbstfütteranlage besteht darin, daß sie die Gefahr der Gewölbe- bzw. Hohlraumbildung in pulverförmigen Futtermitteln vollkommen beseitigt und dadurch eine kontinuierliche Fütterung von Kleintieren, insbesondere Nagetieren in Laboratorien mit pulverförmigem Futtermittel und zwar ohne ständige Aufsicht und mit voller Sicherheit ermöglicht. Einen weiteren Vorteil bedeutet, daß die Tiere das Futter nicht zerwühlen, ausscharren, verunreinigen und in ihren Lebensraum schleppen können, da sie dieses nur in dem zu ihrer Nahrungsaufnahme erforderlichen Ausmaße erreichen können. Dadurch können Futterverluste auf ein Mindestmaß beschränkt, bei der auch einen mit Fußgitter versehenen Futtersammelraum enthaltenden Ausführungsform sogar praktisch vollständig vermieden werden.

## Patentansprüche

1. Selbstfütteranlage zum Verfüttern von pulverförmigem Futter bei der Kleintierhaltung, insbesondere bei Labornagetierhaltung im Käfig, wobei die Anlage an die Käfigseitenwand (17) angeschlossen werden kann und einen oben offenen Futtervorratsraum (1) aufweist, dadurch gekennzeichnet, daß der Futtervorratsraum (1) durch einen sich nach unten erweiternden Mantel (2) begrenzt wird, eine in den Futtervorratsraum (1) hineinreichende, einen Fütterungsraum (6) für ein Tier festlegende Leitplatte (7) vorgesehen ist, der Fütterungsraum (6) mit einer Schwelle (9) mit nach innen abgewinkelter Umrandung versehen ist und der Futtervorratsraum (1) unten mit einer Bodenplatte (4) abgeschlossen ist.

2. Selbstfütteranlage nach Anspruch 1, dadurch gekennzeichnet, daß die Leitplatte (7) die Form eines sich nach unten erweiternden Kegelmantelabschnittes bzw. abgestumpften Kegelmantelabschnittes hat, dessen Kegelwinkel ($\alpha$) kleiner als der Kegelwinkel ($\beta$) des Mantels (2) ist und dessen Grundfläche eine sich an die Umrißlinie des Kopfes des gefütterten Nagetieres anpassende parabelartige Gestalt hat.

3. Selbstfütteranlage nach Anspruch 1 oder 2, dadurch gekennzeichnet, daß der größte Abstand (a) zwischen dem Außenrand des Fütterungsraumes (6) und der Leitplatte (7) im wesentlichen mit dem Abstand vom Nacken bis zur Nasenspitze des gefütterten Tieres übereinstimmt.

4. Selbstfütteranlage nach einem der Ansprüche 1 bis 3, dadurch gekennzeichnet, daß der Abstand (b) zwischen der Unterkante (8) der Leitplatte (7) und der Bodenplatte (4) kleiner als das größte Kopfprofil des gefütterten Tieres ist.

5. *Selbstfütteranlage nach einem der Ansprüche 1 bis 4, dadurch gekennzeichnet, daß vor dem Fütterungsraum (6) ein mit einem Fußgitter (13) und/oder Schutzgitter (16) versehener Futtersammelraum (11) eingefügt ist.*

6. *Selbstfütteranlage nach einem der Ansprüche 1 bis 5, dadurch gekennzeichnet, daß sie ein quer durch den Fütterungsraum (6) geführtes, in der Leitplatte (7) schwenkbar gelagertes, in den Futtervorratsraum (1) hineinreichendes, zur Verhinderung der Gewölbe- bzw. Hohlraumbildung im Futter dienendes Element (10) aufweist.*

0193824

α
β
1
2
7
6
A
A
9
b
8
4
a


Fig.1

A–A
1
2
7
9


Fig.2

2
3
7
5
15
12
13
3
β
1
α
7
2
17
16
6
5
15
13
12
4
8
10
18
9
14
11

Fig.4

Fig.3

20
20
19
20
19


Fig.5a

Fig.5c

Fig.5b